# EUROPEAN PATENT APPLICATION

(11) **EP 2 565 036 A1**
(43) Date of publication of application: **06.03.2013**
(21) Application number: 12182144.1
(22) Date of filing: 29.08.2012
(51) Int. Cl.: B32B 38/14, B65D 65/40, B41M 5/24, B41M 5/28, B32B 38/10

(54) **Packaging material and packages**

(30) Priority: 01.09.2011 IT MO20110225
(71) Applicant: SWISSLOG ITALIA S.p.A., 20121 Milano (IT)
(72) Inventor: Natali, Luca, 48022 Lugo (RA) (IT); Spagna, Lorenzo, 42016 Guastalla (RE) (IT); Este, Flavio, 35030 Selvazzano Dentro (PD) (IT)
(74) Representative: Cicconetti, Andrea

(57) **Abstract**

A packaging material for making packages (20) of products (50), in particular pharmaceutical or medical products, comprises at least one sheet (5) of material and has a portion (2) provided with at least one covering layer (3) arranged for interacting with a laser beam for making visible marks and/or characters (25, 26) on said portion (2), in particular information identifying a product (50) to be packaged.

## Description

The invention relates to automatic machines for packaging of products, such as pharmaceutical products and medical devices and, in particular, it refers to a packaging material that is usable for making in packaging machines packages of products onto which printing information and/or data. The invention further refers to packages made from this packaging material. Packaging machines are known that are arranged for packaging in packets or bags pharmaceutical or medical products, for example pharmaceutical products of different shapes and dimensions, such as oral solids (capsules, tablets, lozenges), blisters, phials, bottles, etc. or medical devices or products, such as syringes, needles, catheters, etc. Such typically disposable packages, are loaded in automated magazines or distributors that are typically used in hospital environments for the administration of pharmaceutical and/or medical products to patients and/or to the departments of the hospital facility.

The bags are generally made by cutting and transversely welding portions or sections of a flattened tubular element unwound from a reel, said tubular element being obtained by folding and welding longitudinally a packaging sheet material. The packaging sheet material is typically a film of non-toxic plastics for use with foodstuffs that is transparent and heat-sealable, for example oriented polypropylene.

A printing apparatus is provided in the machine for printing on each bag all the information necessary for identifying the packaged product, also in the form of a code, in particular a barcode or two-dimensional code.

For direct printing on films of plastics, heat-transfer printers are generally used in which a plastic ribbon is used that is coated with a pigment that is transferred by sublimation onto the film.

In order to make the printing more readable to a user and, above all, to an optical barcode reader, the side of the bag that is printed is generally covered by an opaque contrasting layer, by depositing a pigment or a paint that is generally a light colour.

In heat-transfer printing the use of a ribbon with pigment has numerous drawbacks.

In use, owing to the wear and/or misalignment of the ribbon and/or of the thermal printing head, printing quality can deteriorate, determining possible barcode reading errors by the optical readers. The ribbon with pigment also has to be replaced periodically (frequently in the case of high packaging machine production), this causing machine and production stops of varying length.

Further, the procedures for assembling/dismantling the ribbon are generally laborious for the operator and can be performed incorrectly, with consequent malfunction of or damage to the printing apparatus.

A further drawback of this printing technique consists in the fact that printing, or marking, by sublimation transfer of the pigment in many cases depends on the type of ribbon used, is very shiny on films of plastics, i.e. causes reflection problems and thus problems of correct reading for optical readers that have to acquire, for example, the barcode and/or the printed characters. In order to ensure correct reading, the optical readers have to be suitably calibrated and oriented, in particular in function of the position and movement direction of the package.

Further, as the ribbon for heat-transfer printing is a very common consumable, it is suitable to being procured directly by the customer, who can decide to use a different model from the one approved by the manufacturer. In these circumstances control of a fundamental step in the process may be lost, with consequent reduction in printing quality.

The use of ink-jet apparatuses is also known. Water-based inks are not, however, deposited effectively on the films made of plastics, but have to be used on adhesive paper labels previously applied to the bags. In this case, in addition to the cost of the printer, the cost of the labelling devices and of the labels is added.

Although solvent-based inks are able to be deposited directly on the film of plastics they are not generally used in this technical sector because they generate solvent vapours that are incompatible with the environment in which the machine operates for packaging products.

Ink-jet printing apparatuses also have the drawback of requiring frequent cleaning cycles to prevent the nozzles becoming clogged with drying ink and they have reduced printing performance in terms of resolution and printable area.

One object of the invention is to improve known packaging materials for making packages of pharmaceutical or medical products onto which printing information and/or codes relating to the packaged product, in particular packaging sheet material.

Another object is to obtain a packaging material that ensures high, constant and repeatable printing quality.

A further object is to make a packaging material that enables barcodes or two-dimensional codes to be printed that are readable in a reliable and regular manner by normal optical readers of characters and/or codes without the need for particular adjustments or adaptations.

In a first aspect of the invention a packaging material is provided for making packages of pharmaceutical or medical products according to claim 1.

In a second aspect of the invention a package is provided for pharmaceutical or medical products, comprising the packaging material of the first aspect of the invention and according to claim 13.

Owing to these aspects of the invention it is possible to obtain a packaging material that is usable for making in packaging machines packages, typical single-dose, of pharmaceutical or medical products onto which printing information and/or data of high quality and readability that in particular relate to the packaged product.

The packaging material of the invention in fact comprises at least one sheet of material provided with a portion comprising at least one covering layer arranged for interacting with a laser beam so as to make visible marks and/or characters on said portion.

In particular, the laser beam removes, by ablation or vaporisation, defined portions of the covering layer in such a manner as to uncover underlying portions of the packaging material or of a further covering layer interposed between the covering layer and the sheet of material. The covering layers comprise respective inks having different and/or contrasting colours.

Alternatively, the covering layer comprises a thermochromic ink that the laser beam can activate thermally in such a manner that portions of said covering layer hit by the laser become substantially opaque and/or change colour. Between the covering layer with thermochromic ink and the packaging material a further covering layer can be provided comprising a substantially opaque ink.

The colour and the opacity of the layers can be suitably chosen in such a manner as to make the marks and characters more readable, in particular by normal optical readers, without the need for particular adjustments or adaptations. The laser beam further enables very precise and high-quality printing and marking to be obtained.

It should be noted that using the packaging material of the invention in combination with a laser printing apparatus makes it unnecessary to use inks, in the form of powders, ribbons, liquids, etc. Routine maintenance (and stops of the packaging machine are thus not required, enabling a significant increase in productivity.

The invention can be better comprised and implemented with reference to the attached drawings that illustrate some embodiments thereof by way of non limiting example, in which:
Figure 1 is a schematic plan view of a packaging machine for packaging packages for pharmaceutical or medical products, comprising a printing apparatus;
Figure 2 is a schematic front view of an operating station of the machine in Figure 1, showing in particular the printing apparatus;
Figure 3 is a perspective view of a packaging material of the invention comprising a sheet of material in a folding step, for forming a tubular element with which to supply the machine and the printing apparatus in Figure 1;
Figure 4 is a partial section along the line IV-IV in Figure 3;
Figure 5 is a partial section, like the one in Figure 4, of a version of the packaging material in Figure 3;
Figure 6 is a frontal view of a packaging for pharmaceutical or medical products made with the packaging material in Figure 3;
Figure 7 is a rear view of the package in Figure 6;
Figure 8 is a frontal view of a packaging for pharmaceutical or medical products made with the version of packaging material of Figure 5;
Figure 9 is a frontal view of a further version of the packaging material of the invention comprising two sheets of material fixed along respective longitudinal edges to form a tubular element with which to supply the machine and the printing apparatus of Figure 1;
Figure 10 is a frontal view of a packaging for pharmaceutical or medical products made with the packaging material of Figure 9.

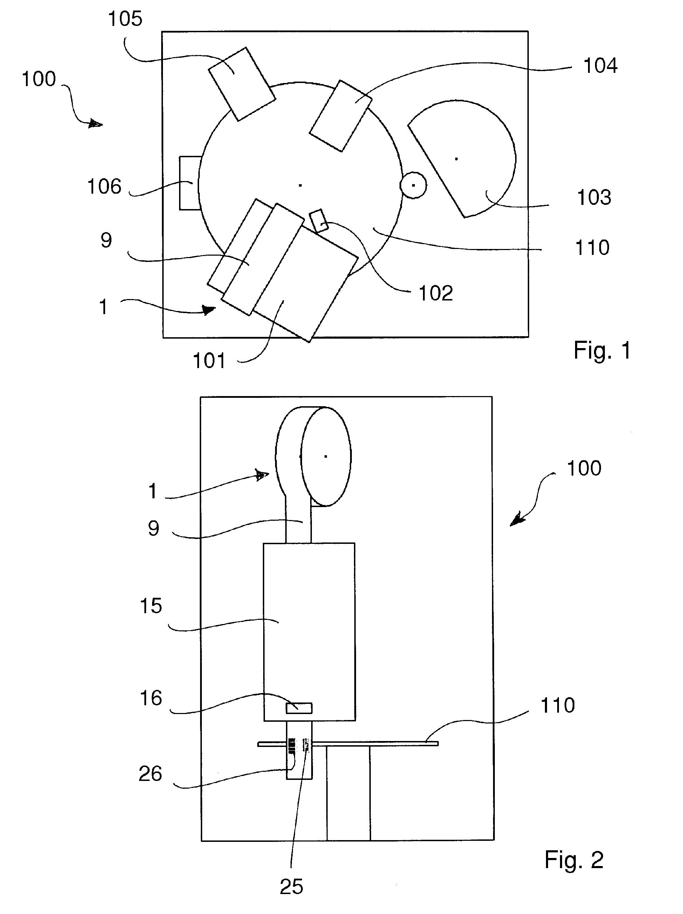

With reference to figure 1, there is illustrated an automatic machine 100 for packaging in packages 20, in particular packets or bags, pharmaceutical or medical products 50, for example pharmaceutical products of different shapes and dimensions, such as oral solids (capsules, tablets, lozenges), blisters, phials, bottles, etc, or medical devices or products, such as syringes, needles, catheters, etc. The packages 20 are typically disposable, i.e. containing a single product 50.

The machine 100, which is of substantially known type and is therefore illustrated schematically in the figures, comprises a first operating station 101 in which packages 20 are made by cutting in sequence a packaging material 1 and welding lower edge elements 22 of the sections thus obtained.

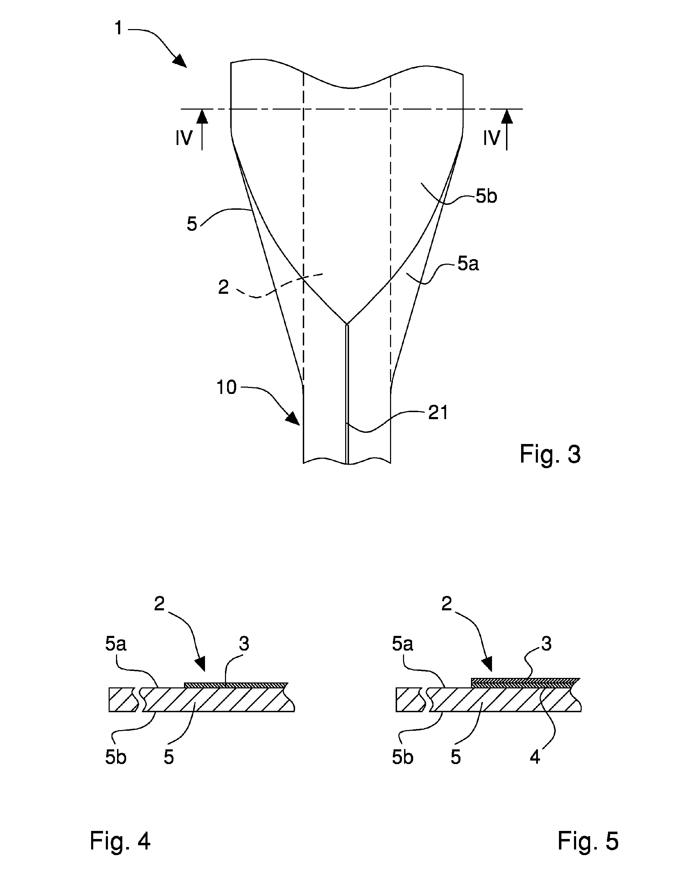

As explained better further on in the description, the packaging material 1 comprises at least one sheet or film 5 of material, for example of plastics, that supplies the machine 100 after being folded and joined longitudinally along a longitudinal joining portion 21, such as to form a tubular element 9 (Figure 3). In particular, the sheet 5 of material is joined longitudinally to form the tubular element 9 by welding, but can also be fixed by gluing or other equivalent and known means.

A version of the packaging machine is provided, which is not illustrated in the figures, in which the tubular element 9 is made from the packaging material 1 by forming means.

In the first operating station 101 a printing apparatus 15 (Figure 2) is provided that has laser generating means 16 arranged for generating on a portion 2 of the packaging material 1, as explained better further on in the description, data and information relating to the packaged product in the form of characters 25 that are readable by an operator and/or in the form of a barcode or a two-dimensional code.

The machine 100 further comprises in sequence and downstream of the first operating station 101, a second operating station 102, in which optical reading means checks whether the data and information (barcode 26 and/or characters 25) printed by the printing apparatus 15 are readable and correct, a third operating station 103 in which each package 20, still open above, is filled with the product 50, a fourth operating station 104, in which an upper edge 23 of the package 20 is welded and a viewing system checks the conformity of the product 50 to the interior thereof, a fifth operating station 105 for piercing the package 20, a sixth outlet operating station 106 of the package 20, for example to an automatic magazine. The packages 20 are moved through the different operating stations by a moving carousel 110. With particular reference to figures 3 and 4, the packaging material 1 of the invention comprises a sheet or film 5 of plastics having two opposite surfaces, a surface 5a and a further surface 5b. The sheet of plastics is, for example, a weldable transparent film of plastics, in particular a film of oriented monolayered or multilayered and heat-sealable polypropylene (OPP) on both the surfaces 5a, 5b.

On a longitudinal portion 2 of the packaging material 1, in particular of the sheet 5 of material, in particular on a surface 5a of the latter, a covering layer 3 is provided that is suitable for interacting with a laser beam sent by the laser generating means 16 of the printing apparatus 15 so as to make on said portion 2 visible marks and/or characters, in particular data and information on the packaged product in the form of characters 25 that are readable by an operator and/or in the form of a barcode or two-dimensional code.

A variant of the covering material 1 is provided, illustrated by the figure 5, in which to the portion 2 a further covering layer 4 is applied, interposed between the covering layer 3 and the surface 5a of the sheet 5 of material.

In a further version of the covering material 1, the further covering layer 4 is applied at the portion 2, on the further surface 5b of the sheet 5 of material opposite the surface 5a on which the first covering layer 3 is applied.

In a first embodiment of the packaging material 1, the covering layer 3 comprises a thermochromic ink, or paint or painting or the like that is thermally activatable and typically irreversibly by means of the laser beam emitted by the laser generating means 16. In particular, the portions of the covering layer 3 that are hit by the laser beam and are thus heated change colour. For example, the thermochromic ink can be of a light or transparent colour and be able to become black or a dark colour in the activated portions. In the version of the covering material 1 of figure 5, the further covering layer 4 comprises a non-transparent, in particular opaque, ink or paint or painting whereas the covering layer 3 comprises a thermochromic ink or paint or painting that is, for example, white or transparent and is able to become opaque and/or change colour when thermally activated.

Several covering layers of the thermochromic ink can be used to improve the printing contrast.

The colour change can be chosen to chromatically contrast with the colour of the further covering layer 4 in such a manner as to make the marks and characters 25, 26 more readable to the human eye and to an optical reader.

In a preferred embodiment, the ink is white at ambient temperature and becomes irreversibly black if activated at a temperature above 80-90°C.

The laser generating means 16 is able to make marks of any form, size and geometry.

The laser generating means 16 is, for example, of the gas type, in particular carbon dioxide, or of the solid-state type, in particular yttrium aluminium garnet (YAG) or ultraviolet (UV).

In the case of a carbon-dioxide laser generating means 16 the power applied for thermally activating the thermochromic ink without making the supporting material deteriorate is comprised between 0.1 and 10 Watt, the wavelength of the laser is comprised between 5 and 20 µm, in particular 10.6 µm, the barcode marking time is comprised between 0.1 and 10 seconds.

In a second embodiment, the covering layer 3 comprises an ink or paint or painting, for example of white or similar colour. In this case the ink can be of the pigment type or be solvent-based or water-based whereas normally thermochromic ink is of pigment type or is water-based. In this case the laser beam of the laser generating means 16 acts by removing, for example by ablation or vaporisation, portions of the covering layer 3 such as to uncover underlying portions of the packaging material 1.

In the version of the covering material 1 in figure 5, the further covering layer 4 comprises a respective ink or paint or painting having a different colour and contrasting with the colouring of the covering layer 3. In this case, the visible marks and/or characters 25, 26 on the portion 2 of the packaging material 1 are made in virtue of the contrast between the colours of the two covering layers 3, 4. In order to make the marks and characters readable to the human eye and to an optical reader, the covering layer 3 is of a light colour, for example white, and the further covering layer 4 is a dark colour, for example black.

The laser generating means 16 is able to make marks of any form, size and geometry. Control means is provided for adjusting the power of the laser generating means 16 in such a manner as to remove only portions of the covering layer 4. The laser generating means 16 is of the gas type, in particular carbon dioxide, or of the solid-state type, in particular yttrium aluminium garnet (YAG) or ultraviolet (UV). In the case of a carbon-dioxide laser generating means 16 the power required for removing portions of the covering layer is comprised between 0.1 and 10 Watt, the wavelength of the laser is comprised between 5 and 20 µm, in particular 10.6 µm, the barcode marking time is comprised between 0.1 and 10 seconds.

The first covering layer 3 and/or the second covering layer 4 are substantially opaque to direct light and semitransparent and diffusive to transmitted light (i.e. the light emitted from a side of the packaging material 1 and detectable or visible from the opposite side the latter), to enable the vision system of the packaging machine 100 to check the conformity of the product 50.

As shown in figure 3, the packaging material 1 is folded and joined longitudinally by a longitudinal joining portion 21 so as to form the flattened tubular element 9 arranged for being cut and closed or joined, in particular welded, transversely to make a plurality of packages 20. In particular, the packaging material 1 is welded and the longitudinal joining portion comprises a longitudinal weld 21.

The portion 2 of the sheet 5 of material that is provided at least with the covering layer 3 is a longitudinal portion of the packaging material 1 that forms a first side of the flattened tubular element 9 opposite a second side that has the longitudinal weld 21.

In a further version of the packaging material 1 that is not shown, the portion 2 forms the second side partially or completely in addition to the first side of the flattened tubular element 9.

In a further version of the packaging material 1 that is not shown, the portion 2 forms, in addition to the first side of the flattened tubular element 9, the second side, partially or completely.

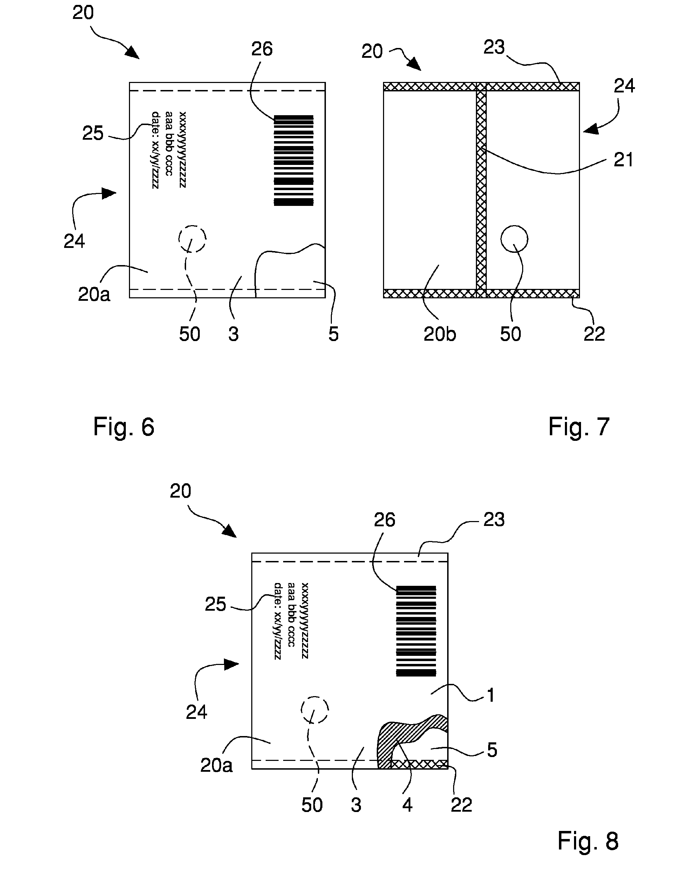

Figures 6 and 7 illustrate a package 20 for pharmaceutical or medical products according to the invention and made with the packaging material 1 disclosed above. The package 20 comprises a central body 24 obtained by cutting a section or portion of the packaging sheet material 1 transversely that is folded and welded longitudinally in such a manner as to form a flattened tubular element 9. The central body 24 substantially defines a bag that is suitable for containing a product 50, for example a pharmaceutical product, and is closed on opposite end edges 22, 23 by transverse joining portions 22, 23, comprising welds in particular.

A first side 20a of the central body 24 is provided with a covering layer 3. On a second side 20b opposite the first side 20a there is a portion of the longitudinal weld 21 of the flattened tubular element 9. The side 20a of the central body 24 in fact comprises the portion 2 of the packaging material 1 on which the covering layer 3 is deposited.

In one version of the package that is not shown, the first covering layer 3 can be deposited only on a part of the aforesaid side 20a of the central body 24.

In another variant of the package that is not shown, the covering layer 3 extends also to the second side 20b.

On the covering layer 3 a laser beam places data and information on the packaged product in the form of characters 25 that are readable by an operator and/or in form of a barcode 26 or two-dimensional code.

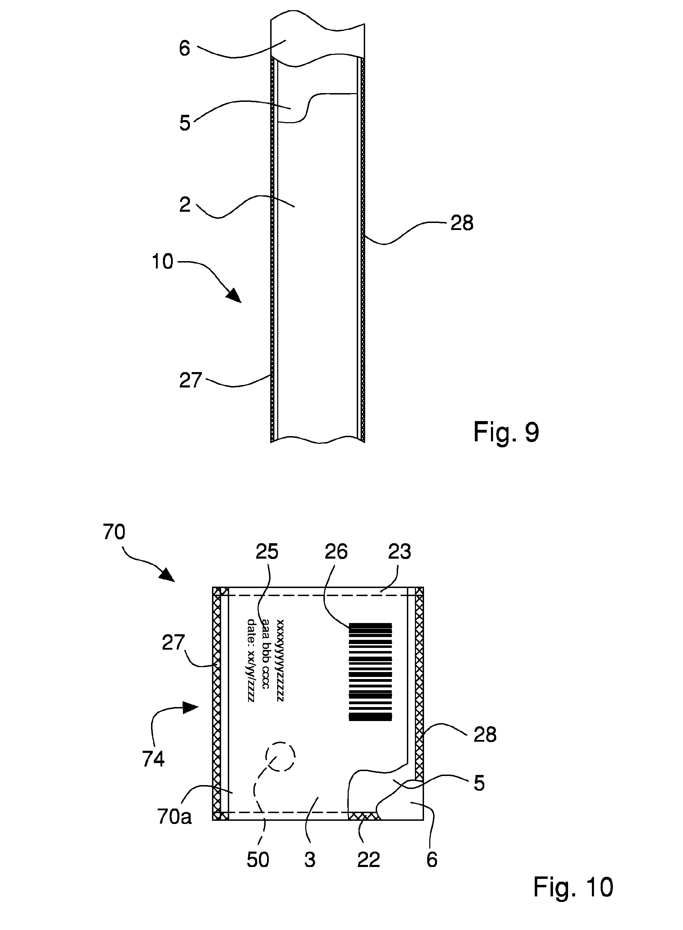

With reference to figures 8, there is illustrated a version of the package 20 for pharmaceutical or medical products according to the invention made with the version of the packaging material 1 in figure 5 and which differs from the package illustrated in figures 6 and 7 by the fact that the first side 20a of the central body 24 is provided with a further covering layer 4 below the covering layer 3, i.e. interposed between the latter and the sheet of material 5. With reference to figure 9, there is illustrated another variant of the packaging material 10 of the invention comprising a further sheet 6 of material applied and fixed to the sheet 5 of material so as to form un flattened tubular element.

The packaging material 10 in the shape of a tubular element is supplied to the machine 100 to be cut and closed transversely by transverse joining portions 22, 23, in such a manner as to make packages 70.

The sheet 5 and the further sheet 6 are mutually fixed along respective opposite longitudinal edges by longitudinal joining portions 27, 28. In particular, the sheet 5 and the further sheet 6 are welded together and the longitudinal joining portions 27, 28 comprise respective longitudinal welds 27, 28. The joining portions 27, 28 can also be obtained by gluing or other equivalent and known means.

The further sheet 6 of material is, for example, a weldable and transparent film of plastics that is heat-sealable or a film of aluminium or a sheet of paper.

Figure 10 illustrates a version of the package 70 according to the invention made with the version of the packaging material 10 disclosed above and illustrated in figure 9 and which comprises a central body 74 obtained by cutting transversely a section or portion of the packaging material 10 having a flattened tubular shape. The central body 74 substantially defines a bag that is suitable for containing a product 50, for example a pharmaceutical product, and is closed on opposite end edges by the transverse joining portions 22, 23.

One side 70a of the central body 74, formed by the sheet 5 of material, is provided with a covering layer 3. A further side opposite the first side 70a is formed by the further sheet 6. The side 70a of the central body 74 comprises the portion 2 of the packaging material 10 on which the covering layer 3 is deposited.

The method for printing on the packaging material 1 comprising at least one sheet 5 of material and usable as said above to make packages 20 of pharmaceutical or medical devices and products 50 substantially comprises the following steps of:
- applying to a portion 2 of the packaging material 1, in particular to the sheet 5, at least one covering layer 3;
- operating by means of a laser beam on the covering layer 3 in such a manner as to make visible marks and/or characters 25, 26, for example data and information on a product to be packaged in the form of characters 25 that are readable by an operator and/or in the form of a barcode or two-dimensional code 26.

The first step of applying the covering layer 3 is generally performed in the packaging material 1 preparation procedure, whilst the second step of driving the laser is performed by the first operating station 101 in the packaging machine 100 of the printing apparatus 15, as disclosed above.

The first step can also comprise applying a further covering layer 4 interposed between the covering layer 3 and the packaging material 1.

In the packaging material 1 preparation procedure, i.e. before driving the laser beam, the aforesaid packaging material 1 is also folded and joined, in particular welded, longitudinally, in such a manner as to form the flattened tubular element 9 intended for being cut and joined, in particular welded, transversely in the packaging machine 1 to make the packages 20.

Alternatively, the packaging material 1 can be folded and welded after the visible marks and characters 25, 26 have been made by the laser beam on the covering layer 3 of the sheet 5.

The covering layer 3 and possibly the further covering layer 4 is applied to the portion 2 of the packaging material 1, for example, before folding and welding the latter longitudinally.

It is also provided that the covering layer 3 is applied to the portion 2 of the sheet 5 of material after fixing to the latter a further sheet 6 of material. In this version, the packaging material 10 comprises two sheets 5, 6 of material that are mutually fixed along respective opposite longitudinal edges by longitudinal joining portions 27, 28, the packaging material 10 thus forming a flattened tubular element.

Alternatively, the further sheet 6 can be applied and fixed to the sheet 5 - to form the packaging material 10 as a tubular element - after applying to the portion 2 the covering layer 3 and possibly after making the visible marks and/or characters 25, 26 with the laser beam.

The laser beam, emitted by gas laser generating means, for example carbon dioxide, or by solid state laser generating means, for example yttrium aluminium garnet (YAG), is suitably adjusted and controlled in such a manner as to operate on the covering layer 3. In particular, in the case of carbon dioxide laser generators 16, the power required for removing portions of the covering layer 3 is comprised between 0.1 and 10 Watt, the wavelength of the laser is comprised between 5 and 20 µm, in particular 10.6, the barcode marking time is comprised between 0.1 and 10 seconds. In a first embodiment of the method a covering layer 3 comprising an ink or paint or painting or the like that is thermochromic and white or transparent is applied to the portion 2 of the packaging material 1. The laser beam operates by thermally activating the thermochromic ink in such a manner that it irreversibly changes colour. For example, the thermochromic ink can be white or anyway light in colour and be able to become black or a dark colour in the activated portions.

If the further covering layer 4, interposed between the covering layer 3 ed the packaging material 1 is applied to the portion 2, this further covering layer 4 comprises an ink or paint or painting that is non-transparent, in particular opaque, whilst the covering layer 3 comprises an ink, or paint or painting or the like that is thermochromic, for example transparent and able to become opaque and/or change colour when thermally activated.

The colour change can be suitably selected to contrast chromatically with the colour of the further covering layer 4 in such a manner as to make the marks and characters 26, 26 more readable to the human eye and to an optical reader.

In a second embodiment of the method a covering layer 3 comprising an ink or paint or painting or the like is applied to the portion 2 of the packaging material.

In this case, the laser beam operates on the portion 2 by removing, in particular by ablation or vaporisation, defined portions of the covering layer 3 in such a manner as to uncover underlying portions of the packaging material 1.

If the further covering layer 4, interposed between the covering layer 3 and the packaging material 1 is applied to the portion 2, laser beam operates on the portion 2 by removing defined portions of the covering layer 3, in such a manner as to uncover underlying portions of the further covering layer 4. The uncovered portions of the further covering layer 4 define the visible marks and/or characters 25, 26. The covering layer 3 and the further covering layer 4 comprise respective inks or paints or paintings or the like, having different and contrasting colours; for example the second covering layer 4 is of a clear (white) colour and the first covering layer 3 is of a dark (black) colour. the aforesaid different and contrasting colours of the two covering layers 3, 4 make the visible marks and/or characters 25, 26 clearly readable to the human eye and to an optical reader.

## Claims

1. Packaging material for making packages (20) of products (50), in particular pharmaceutical or medical products, comprising at least one sheet (5) of material and having a portion (2) provided with at least one covering layer (3) arranged for interacting with a laser beam to make on said portion (2) visible marks and/or characters (25, 26), in particular information identifying a product (50) to be packaged.

2. Packaging material according to claim 1, wherein said covering layer (3) is applied to a surface (5a, 5b) of said sheet (5) of material.

3. Packaging material according to claim 1 or 2, comprising a further covering layer (4) applied onto said portion (2) and cooperating with said covering layer (3) to make said visible marks and/or characters (25, 26).

4. Packaging material according to claim 3, wherein said further covering layer (4) is interposed between said covering layer (3) and a surface (5a) of said sheet (5) of material and/or is applied to a further surface (5b) of said sheet (5) of material that is opposite to a surface (5a) to which said covering layer (3) is applied.

5. Packaging material according to any preceding claim, wherein said covering layer (3) comprises an ink that is removable by said laser beam, in particular by ablation or vaporization.

6. Packaging material according to claim 3, wherein said covering layer (3) and said further covering layer (4) comprise respective inks having different and/or contrasting colours, said covering layer (3) comprising a removable ink, that is in particular removable by ablation or vaporization, by said laser beam in defined portions in such a manner as to uncover underlying portions of said further covering layer (4).

7. Packaging material according to any one of claims 1 to 4, wherein said covering layer (3) comprises a thermochromic ink, that is thermally activatable by said laser beam so as to become substantially opaque and/or change colour.

8. Packaging material according to claim 3 or 4, wherein said further covering layer (4) comprises a non-transparent ink and said covering layer (3) comprises a thermochromic ink, in particular an ink that is transparent or of a light colour that is thermally activatable by said laser beam so as to become substantially opaque and/or change colour.

9. Packaging material according to any preceding claim, wherein said sheet (5) of material is a weldable and transparent film of plastics, in particular a multilayer heat-sealable oriented polypropylene (OPP) film.

10. Packaging material according to any preceding claim, wherein said sheet (5) of material is folded and joined longitudinally so as to form a flattened tubular element (9) arranged for being cut and joined transversely to make packages (20) for products (50), in particular pharmaceutical or medical products.

11. Packaging material according to any one of claims 1 to 9, comprising a further sheet (6) of material fixed to said sheet (5) of material, said packaging material (10) making a flattened tubular element arranged for being cut and closed transversely by transverse joining portions (22, 23) so as to make packages (70).

12. Packaging material according to claim 11, wherein said sheet (5) of material and said further sheet (6) of material are fixed together along respective opposite longitudinal edges by longitudinal joining portions (27, 28).

13. Package for products (50), in particular pharmaceutical or medical products, comprising a packaging material (1; 10) according to any preceding claim.

14. Package according to claim 13, comprising a central body (24) obtained by cutting transversely a portion of said packaging material (1) that is folded and joined longitudinally so as to form a flattened tubular element (9), said central body (24) defining a bag that is suitable for containing a product (50) and is closed at opposite ends by transverse joining portions (22, 23).

15. Package according to claim 13, comprising a central body (74) obtained by cutting transversely a portion of said packaging material (10) comprising a sheet (5) of material and a further sheet (6) of material that are fixed together along respective opposite longitudinal edges by longitudinal joining portions (27, 28) so as to form a flattened tubular element, said central body (74) defining a bag that is suitable for containing a product (50) and closed at opposite ends by transverse joining portions (22, 23).

16. Package according to claim 14 or 15, wherein at least one portion of a side (20a, 20b; 70a) of said central body (24; 74) is provided with at least one covering layer (3) on which visible marks and/or characters (25, 26) are makeable by laser beam, in particular information identifying a product (50) contained in said package (20; 70).
